# EUROPÄISCHE PATENTANMELDUNG

(11) **EP 1 521 065 A1**
(43) Veröffentlichungstag der Anmeldung: **06.04.2005**
(21) Anmeldenummer: 04021138.5
(22) Anmeldetag: 06.09.2004
(51) Int. Cl.: G01F 23/26

(54) **Verfahren zur Füllstanderfassung in einem Behälter und entsprechendes Füllstand-Messsystem**

(30) Priorität: 01.10.2003 DE 10345707
(71) Anmelder: Volkswagen Aktiengesellschaft, 38436 Wolfsburg (DE)
(72) Erfinder: Rossmann, Werner, 38446 Wolfsburg (DE)
(74) Vertreter: Banzer, Hans-Jörg, Dipl.-Ing.

(57) **Zusammenfassung**

Die Erfindung betrifft ein Verfahren sowie ein entsprechendes Messsystem zur Erfassung eines Füllstandes in einem Behälter 5, speziell in einem Kraftstoff-Behälter eines Fahrzeuges, mit Hilfe eines mehrere Sensorelemente 10, von denen jedes einen bestimmten Füllhöhenbereich erfasst, umfassenden Füllstandsensors. Bei den Sensorelementen 10 kann es sich insbesondere um kapazitive Sensorelemente handeln. Erfindungsgemäß wird ein Verfahren vorgeschlagen, gemäß dem zunächst ein erstes Auswerten der Sensorelemente erfolgt, um dasjenige Sensorelement 10 zu bestimmen, welches den Füllhöhenbereich erfasst, in welchem sich ein Flüssigkeitspegel 2 befindet. Daraufhin erfolgt ein weiteres Auswerten des bei dem ersten Auswerten bestimmten Sensorelements 10, um die Position des Flüssigkeitspegels 2 innerhalb des von diesem Sensorelement 10 erfassten Füllhöhenbereichs zu bestimmen, und darauf basierend den Füllstand des Behälters 5 zu ermitteln.

## Beschreibung

Die Erfindung betrifft ein Verfahren zur Füllstanderfassung in einem Behälter mit Hilfe eines mehrere Sensorelemente umfassenden Füllstandsensors und ein entsprechendes Füllstand-Messsystem. Die Erfindung betrifft im Speziellen die Füllstanderfassung mit Hilfe kapazitiver Füllstandsensoren in einem Kraftstoff-Behälter eines Fahrzeuges.

Herkömmliche in Kraftfahrzeugen zur Messung eines Füllstands eines Kraftstoff-Behälters eingesetzte Füllstand-Messsysteme basieren häufig auf einem Schwimmer. Der Schwimmer bewegt sich mit einem Flüssigkeitspegel und ist mechanisch mit einem Stellelement, z.B. einem Potentiometer, verbunden. Der Füllstand kann durch Auswerten des Widerstandes des Potentiometers bestimmt werden. Hierfür umfasst ein derartiges Füllstand-Messsystem üblicherweise Mittel zur Berücksichtigung einer Füllhöhen-Füllvolumen-Kennlinie, welche eine Zuordnung einer Füllhöhe, d.h. einer Position des Schwimmers, zu einem entsprechenden Füllvolumen erlauben. Probleme bei diesen mechanischen Füllstand-Messsystemen bestehen z.B. in einer geringen Genauigkeit und Verschleiß von beweglichen Teilen.

Elektronische Füllstandsensoren, insbesondere kapazitive Füllstandsensoren, erfordern keine bewegliche Teile und vermeiden somit Verschleiß aufgrund von mechanischer Beanspruchung. Auch ermöglicht der Einsatz von kapazitiven Füllstandsensoren in einem Füllstand-Messsystem eine hohe Präzision bei der Bestimmung der Füllhöhe, und somit eine genaue Füllstandmessung.

Bei kapazitiven Füllstandsensoren wird im Allgemeinen die Kapazität einer durch zwei Elektroden gebildeten Kondensatoranordnung ausgewertet. Die Elektroden sind derart in dem Behälter angeordnet, dass ein Raum zwischen den Elektroden der Flüssigkeit zugänglich ist. Abhängig von der Füllhöhe in dem Behälter ändert sich auch der Flüssigkeitspegel zwischen den Elektroden. Die Flüssigkeit, z.B. der Kraftstoff, weist eine relative dielektrische Konstante auf, die sich von der des Gasvolumens oberhalb des Flüssigkeitspegels unterscheidet. Somit weist ein Paar von Elektroden, das sich vollständig unterhalb des Flüssigkeitspegels befindet, eine unterschiedliche Kapazität auf als ein Paar von Elektroden, das sich vollständig oberhalb des Flüssigkeitspegels befindet. Befinden sich die Elektroden mit einem Teil oberhalb des Flüssigkeitspegels und mit einem anderen Teil unterhalb des Flüssigkeitspegels, so nimmt die Kapazität einen Zwischenwert ein. Somit kann der Füllstand des Behälters im Prinzip bestimmt werden, indem die Kapazität eines Paars von Elektroden ausgewertet wird, welches sich von einer oberen Füllgrenze des Behälters bis zu einer unteren Füllgrenze, bzw. einem Boden des Behälters erstreckt. In diesem Fall wird eine kontinuierliche Änderung der Kapazität von einem maximalen Wert, welcher vollständig unterhalb des Flüssigkeitspegels befindlichen Elektroden entspricht, zu einem minimalen Wert, welcher vollständig im Gasvolumen befindlichen Elektroden entspricht, ausgewertet.

Ein Problem bei der oben beschriebenen Auswertung einer kontinuierlichen Kapazitätsänderung, welche dem gesamten Füllhöhenbereich entspricht, besteht jedoch darin, dass die gemessene absolute Kapazität insbesondere von der relativen dielektrischen Konstante der jeweiligen Flüssigkeit abhängt, und somit für verschiedene Flüssigkeiten einen unterschiedlichen Wert annimmt. Ein derartiger Füllstandsensor erfordert daher eine der jeweiligen Flüssigkeit entsprechende Kalibration. Darüber hinaus ist es bei Gemischen häufig der Fall, dass die Zusammensetzung des Gemisches und damit auch die relative dielektrische Konstante sich abhängig von der Höhe über dem Boden des Behälters verändert. Bei Kraftstoffen ist beispielsweise ein Wasseranteil im unteren Bereich des Behälters deutlich höher als im oberen Bereich des Behälters, und es kann zu einer Ausbildung von Schichten innerhalb des Behälters kommen. Die relative dielektrische Konstante stellt somit eine Größe dar, die abhängig von der Höhe über dem Boden des Behälters variiert, wodurch eine Messung des Füllstandes über die Kapazität verfälscht wird.

Angesichts dieser Problematik wurden kapazitive Füllstandsensoren entwickelt, die eine Vielzahl von Elektroden verwenden. In einem solchen aus mehreren Sensorelementen aufgebauten Füllstandsensor dient typischerweise jedes einzelne Sensorelement der Erfassung eines bestimmten Füllhöhenbereichs. So kann z.B. bei einer Reihe von Kondensatoren, die in verschiedenen Höhen über dem Boden des Behälters angeordnet sind, aufgrund eines typischerweise vergleichsweise großen Unterschieds der relativen dielektrischen Konstanten von Gas und Flüssigkeit recht zuverlässig festgestellt werden, ob sich ein Kondensator vollständig oberhalb des Flüssigkeitspegels oder vollständig unterhalb des Flüssigkeitspegels befindet. Die Kondensatoren können somit als Niveauschalter verwendet werden, wobei die Füllhöhe in Stufen bestimmbar ist. Für eine hohe Genauigkeit der Füllhöhenbestimmung ist dementsprechend eine hohe Zahl von Niveauschaltern erforderlich. Weiterhin ist es möglich, Referenzelektroden bzw. Referenzkondensatoren einzusetzen, die es ermöglichen, eine Änderung der relativen dielektrischen Konstante abhängig von der Höhe über dem Boden des Behälters zu erfassen, so dass diese bei einer Auswertung von kontinuierlichen Änderungen der Kapazität berücksichtigt werden kann. Der Einsatz von Referenzelektroden bzw. Referenzkondensatoren ist jedoch mit zusätzlichem Aufwand verbunden.

Es ergibt sich somit als Problem, dass eine hohe Genauigkeit nur mit einem hohen Aufwand in Form von zusätzlichen Sensorelementen oder Referenzelementen erreicht werden kann.

Aus der DE 199 16 979 A1 ist ein Verfahren zur Füllstandsmessung mit einer Vielzahl nebeneinander entlang einer Füllstrecke angeordneter kapazitiver Sensorelemente bekannt. Das Verfahren sieht eine Erfassung von kontinuierlichen Änderungen der Position des Flüssigkeitspegels innerhalb des von einem der Sensorelemente erfassten Füllhöhenbereichs vor. Hierzu wird jeweils ein Paar von benachbarten Sensoren ausgewertet. Dies erfolgt vorzugsweise für entlang der Füllstrecke angeordnete Paare von Sensorelementen der Reihe nach, indem das eine Sensorelement mit einem Messsignal beaufschlagt wird und das andere Sensorelement mit einem phasenverschobenen Messsignal beaufschlagt wird. Der Füllstand wird abhängig von der Phasenverschiebung der resultierenden Signale bzw. eines resultierenden Summensignals ermittelt. Hieraus ergibt sich als Problem, dass das Auswerten der Phasenverschiebung für alle Paare von Sensorelementen entlang der Füllstrecke erfolgt, jedoch lediglich bei einem der ausgewerteten Paare die gewünschte Füllstandinformation erhalten wird.

Eine Aufgabe der vorliegenden Erfindung ist es daher, ein Verfahren bzw. ein Füllstand-Messsystem bereitzustellen, welches das oben beschriebene Problem löst und insbesondere mit geringem Aufwand eine genaue Bestimmung des Füllstandes ermöglicht.

Diese Aufgabe wird durch ein Verfahren mit den Merkmalen des Anspruchs 1 bzw. durch ein Füllstand-Messsystem mit den Merkmalen des Anspruch 15 gelöst. Die abhängigen Ansprüche definieren bevorzugte oder vorteilhafte Ausführungsformen der Erfindung.

Das erfindungsgemäße Verfahren dient der Erfassung eines Füllstandes in einem Behälter mit Hilfe eines eine Vielzahl von Sensorelementen umfassenden Füllstandsensors. Jedes der Sensorelemente erfasst dabei einen bestimmten Füllhöhenbereich. Das erfindungsgemäße Verfahren sieht vor, dass zunächst die Sensorelemente ausgewertet werden, um den Füllhöhenbereich zu bestimmen, in welchem sich ein Flüssigkeitspegel befindet, d.h. es wird ein Sensorelement bestimmt, das den Füllhöhenbereich erfasst, in welchem sich der Flüssigkeitspegel befindet. Daraufhin erfolgt ein weiteres Auswerten des demjenigen Füllhöhenbereich, in welchem sich der Flüssigkeitspegel befindet, entsprechenden Sensorelements. Der Füllstand ergibt sich dabei aus der Position des Sensorelements und der Position des Flüssigkeitspegels innerhalb des von dem Sensorelement erfassten Füllhöhenbereichs. Bei dem Füllstandsensor kann es sich insbesondere um einen kapazitiven Füllstandsensor handeln.

Vorzugsweise erfolgt das erste Auswerten der Sensorelemente separat in einer bestimmten Reihenfolge, d.h. die Sensorelemente werden nacheinander ausgewertet. Dabei ist es besonders vorteilhaft, Sensorelemente, welche mit hoher Wahrscheinlichkeit in der Nähe des Flüssigkeitspegels liegen, zuerst auszuwerten, so dass eine schnelle Bestimmung desjenigen Sensorelements, das den Füllhöhenbereich erfasst, in welchem sich der Flüssigkeitspegel befindet, erfolgen kann. Das erste Auswerten kann abgebrochen werden, nachdem das genannte Sensorelement identifiziert ist, wodurch das Auswerten insgesamt verkürzt wird. Eine weitere Beschleunigung des ersten Auswertens kann erreicht werden, indem mit Sensorelementen begonnen wird, welche in der Nähe eines Initialpegels liegen. Bei dem Initialpegel kann es sich beispielsweise um die zuletzt bestimmte Position des Flüssigkeitspegels handeln.

Bei dem zweiten Auswerteschritt ist es vorteilhaft, eine Differenz zu einem Referenzwert auszuwerten. Der Referenzwert kann dabei beispielsweise derart gewählt sein, dass er dem an einem vollständig unterhalb des Flüssigkeitspegels befindlichen Sensorelement gemessenen Wert entspricht. Über den Differenzwert kann die Position des Flüssigkeitspegels innerhalb des von dem Sensorelement erfassten Füllhöhenbereichs bestimmt werden. Dabei ist es besonders vorteilhaft, den Referenzwert durch Auswerten der vollständig unterhalb des Flüssigkeitspegels befindlichen Sensorelemente zu bestimmen. Auf diese Weise kann der Füllstand des Behälters unabhängig von den speziellen Eigenschaften, z.B. einer relativen dielektrischen Konstanten, der Flüssigkeit in dem Behälter erfasst werden. Für mehrere vollständig unterhalb des Flüssigkeitspegels befindliche Sensorelemente kann durch Auswerten mehrerer bzw. aller dieser Sensorelemente der Referenzwert genauer bestimmt werden, z.B. indem ein Mittelwert gebildet wird. Aufgrund von Schichtenbildung in der Flüssigkeit oder Ablagerungen am Boden des Behälters kann es dabei vorteilhaft sein, an einzelnen Sensorelementen gemessene Werte, welche deutlich von der Mehrheit der an den unterhalb des Flüssigkeitspegels befindlichen Sensorelementen gemessenen Werte abweichen, bei der Bestimmung des Referenzwertes nicht zu berücksichtigen. Weiterhin kann es vorteilhaft sein, den Referenzwert zur Verwendung in einem späteren Messzyklus abzuspeichern. Der gespeicherte Wert kann z.B. in dem Fall verwendet werden, wenn der Flüssigkeitspegel sich in dem von einem untersten Sensorelement erfassten Füllhöhenbereich befindet.

Ein erfindungsgemäßes Füllstand-Messsystem umfasst mehrere Sensorelemente, von denen jedes einen bestimmten Füllhöhenbereich erfasst, sowie eine Auswertungsvorrichtung. Die Auswertungsvorrichtung ist dabei derart ausgestaltet, dass zunächst ein erstes Auswerten der Sensorelemente erfolgt, um den Füllhöhenbereich und das entsprechende Sensorelement zu bestimmen, in welchem sich ein Flüssigkeitspegel befindet. Daraufhin wird in einem weiteren Auswerteschritt die Position des Flüssigkeitspegels innerhalb des von dem zuvor bestimmten Sensorelement erfassten Füllhöhenbereichs ermittelt, um dadurch den Füllstand des Behälters zu bestimmen.

Die Erfindung bietet den Vorteil einer genauen Erfassung des Füllstandes bei einem geringen Aufwand. Insbesondere wird eine verbesserte Genauigkeit gegenüber einem Verfahren erreicht, bei welchem die Sensorelemente lediglich als Niveauschalter eingesetzt werden. Im Gegensatz zu einem Verfahren, bei welchem grundsätzlich alle Sensorelemente ausgewertet werden, um kontinuierliche Änderungen der Position des Flüssigkeitspegels zu erfassen, erfolgt erfindungsgemäß eine Auswertung, welche sich auf die relevanten Sensorelemente konzentriert. Hierdurch kann bei der Auswertung der Sensorelemente im Verhältnis mehr Zeit für die relevanten Sensorelemente aufgewendet werden, wodurch die Füllstanderfassung beschleunigt wird, bzw. eine genauere Auswertung, z.B. durch längere Glättungszeiten, erfolgen kann. Weitere Vorteile sind aus der folgenden detaillierten Beschreibung der Erfindung anhand bevorzugter Ausführungsbeispiele ersichtlich.

Die Erfindung wird nachfolgend unter Bezugnahme auf die beigefügten Zeichnungen anhand bevorzugter Ausführungsbeispiele erläutert.

Fig. 1 zeigt schematisch einen Füllstandsensor mit einer Vielzahl von Sensorelementen, welche entlang einer Füllrichtung des Behälters angeordnet sind, wobei der Füllstandsensor zur Durchführung eines Verfahrens gemäß einem Ausführungsbeispiel der vorliegenden Erfindung geeignet ist,

Fig. 2 zeigt vergrößert eine Anordnung von kapazitiven Sensprelementen, wobei die Anordnung zur Durchführung des Verfahrens gemäß dem Ausführungsbeispiel der vorliegenden Erfindung geeignet ist, und

Fig. 3 zeigt schematisch eine Schaltungsanordnung für eine Auswertungselektronik in einem Füllstand-Messsystem gemäß dem Ausführungsbeispiel der vorliegenden Erfindung.

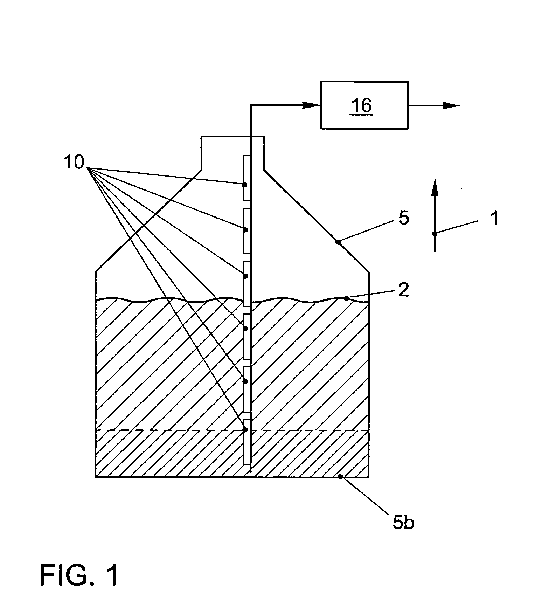

In Fig. 1 ist schematisch Füllstand-Messsystem zur Erfassung eines Füllstandes in einem Behälter 5, z.B. dem Kraftstoff-Behälter eines Fahrzeuges, mit einer Vielzahl von Sensorelementen 10 gezeigt. Die Sensorelemente 10 sind als kapazitive Sensorelemente 10 ausgeführt. Die Sensorelemente 10 sind entlang einer Füllrichtung 1 des Behälters 5 angeordnet, so dass jedes der Sensorelemente 10 einen bestimmten Füllhöhenbereich erfasst. Bei der Füllhöhenrichtung 1 handelt es sich um die Richtung, entlang welcher sich ein Flüssigkeitspegel 2 in dem Behälter bewegt, wenn der Behälter 5 gefüllt oder entleert wird. Die Sensorelemente 10 bzw. die entsprechenden Füllhöhenbereiche befinden sich jeweils in einer definierten Höhe über dem Boden 5b des Behälters. Für jedes Sensorelement 10 wird ein Wert einer Messgröße, welche von einer Eintauchtiefe des Sensorelements 10 in die Flüssigkeit abhängt, durch eine Auswertungsvorrichtung 16 ausgewertet. Bei den kapazitiven Sensorelementen 10 des in Fig. 1 gezeigten Ausführungsbeispiels handelt es sich bei dieser Messgröße um eine Kapazität. Die Kapazitäten der Sensorelemente 10 werden durch die Auswertungsvorrichtung 16 ausgewertet.

In Fig. 1 ist der spezielle Fall gezeigt, dass sich in dem Behälter 5 innerhalb der Flüssigkeit Schichten ausgebildet haben. Somit befindet sich eine obere Gruppe der Sensorelemente 10 in einem Gasvolumen oberhalb des Flüssigkeitspegels 2 und eine untere Gruppe von Sensorelementen 10 befindet sich in der Flüssigkeit. Ein unterstes Sensorelement 10 befindet sich teilweise in einer oberen Flüssigkeitsschicht und teilweise in einer unteren Flüssigkeitsschicht. Die Kapazitäten, die an den Sensorelementen 10 der oberen Gruppe gemessen werden, unterscheiden sich deutlich von den Kapazitäten, die an den Sensorelementen 10 der unteren Gruppe gemessen werden. Eines der Sensorelemente 10 erfasst einen Füllhöhenbereich, in welchem sich der Flüssigkeitspegel 2 befindet. Für dieses Sensorelement wird ein Wert der Kapazität gemessen, welcher zwischen den an den Sensorelementen 10 der oberen Gruppe gemessenen Werten und den an den Sensorelementen 10 der unteren Gruppe gemessenen Werten angesiedelt ist.

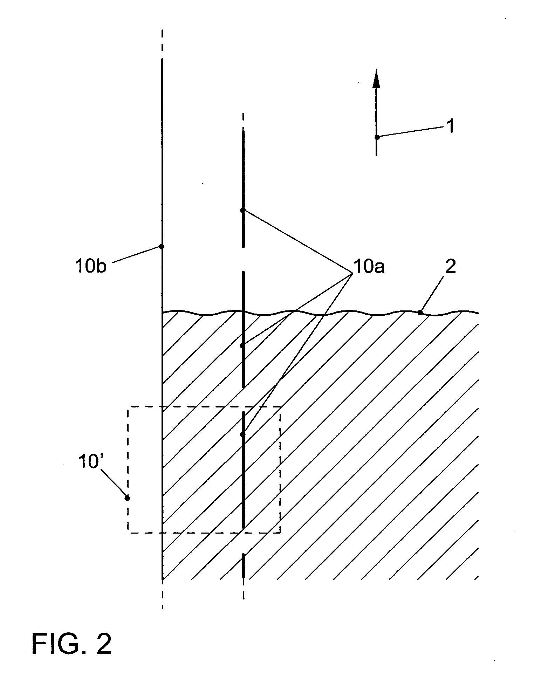

Die Funktionsweise der Sensorelemente 10 wird im Folgenden näher anhand von kapazitiven Sensorelementen, wie in Fig. 2 gezeigt, erläutert. Fig. 2 zeigt eine vergrößerte Ansicht einer Anordnung von Messelektroden 10a gegenüber einer leitfähigen Oberfläche 10b. Die Messelektroden 10a bilden zusammen mit der leitfähigen Oberfläche 10b Mess-Kondensatoren 10'. In Fig. 4 sind Mess-Kondensatoren 10' gezeigt, von denen sich einer der Mess-Kondensatoren 10' vollständig unterhalb des Flüssigkeitspegels 2 befindet, ein weiterer der Mess-Kondensatoren 10' sich teilweise unterhalb des Flüssigkeitspegels 2 befindet und noch ein weiterer der Mess-Kondensatoren 10' sich vollständig oberhalb des Flüssigkeitspegels 2 in einem Gasvolumen befindet. Aufgrund von unterschiedlichen relativen dielektrischen Konstanten der Flüssigkeit und des Gasvolumens weisen die oben genannten Mess-Kondensatoren 10' unterschiedliche Kapazitäten auf. Typischerweise weist der erstgenannte Mess-Kondensator 10' in der Flüssigkeit eine Kapazität auf welche größer ist, als die der übrigen genannten Mess-Kondensatoren 10'. Die Kapazität des teilweise unterhalb des Flüssigkeitspegels 2 befindlichen Mess-Kondensators 10' weist einen Wert auf, der zwischen den Werten der beiden anderen genannten Mess-Kondensatoren 10' liegt. Jeder der Mess-Kondensatoren 10' erfasst einen bestimmten Füllhöhenbereich.

Bei einem Verfahren gemäß einem Ausführungsbeispiel der vorliegenden Erfindung wird die Position des Flüssigkeitspegels 2 bestimmt, indem zunächst die Sensorelemente 10 ausgewertet werden, um den Füllhöhenbereich und das entsprechende Sensorelement 10 zu bestimmen, in welchem sich der Flüssigkeitspegel 2 befindet. Hierfür wird lediglich der oben genannte deutliche Unterschied zwischen Sensorelementen 10 der oberen Gruppe und Sensorelementen 10 der unteren Gruppe erfasst. Für dieses erste Auswerten ist somit keine hohe Genauigkeit erforderlich.

Die Sensorelemente 10 werden nacheinander in einer bestimmten Reihenfolge ausgewertet. Die Reihenfolge der Auswertung ist derart gewählt, dass Sensorelemente 10, welche sich mit hoher Wahrscheinlichkeit nahe dem Flüssigkeitspegel 2 befinden, zuerst ausgewertet werden. Sobald das Sensorelement 10, das denjenigen Füllhöhenbereich erfasst, in welchem sich der Flüssigkeitspegel 2 befindet, identifiziert ist, werden in diesem ersten Auswerteschritt keine weiteren Sensorelemente 10 ausgewertet, so dass keine Zeitverluste durch unnötige Auswertungen auftreten.

Beispielsweise ist es vorteilhaft, wenn der Behälter 5 vornehmlich einen hohen Füllstand aufweist, zunächst ein in der Füllhöhenrichtung 1 oberstes Sensorelement 10 auszuwerten, daraufhin ein darunter angeordnetes Sensorelement usw.. Andererseits kann es, wenn der Behälter 5 vornehmlich einen niedrigen Füllstand aufweist, vorteilhaft sein mit dem untersten Sensorelement 10 zu beginnen. Es kann auch vorteilhaft sein, mit einem mittleren Sensorelement 10 zu beginnen, dann ein unter dem mittleren Sensorelement 10 befindliches Sensorelement 10 auszuwerten, danach ein oberhalb des mittleren Sensorelements 10 befindliches Sensorelement 10 auszuwerten usw., so dass von der Mitte des Behälters in beide Richtungen ausgehend Sensorelemente 10 ausgewertet werden. Weiterhin kann mit einem nahe eines Initialpegels befindlichen Sensorelement 10 begonnen werden. Bei dem Initialpegel handelt es sich beispielsweise um die zuletzt erfassten Position des Flüssigkeitspegels 2.

Nach dem ersten Auswerteschritt erfolgt ein weiterer, genauerer Auswerteschritt. Hierbei wird die Kapazität, welche an dem im ersten Auswerteschritt bestimmten Sensorelement 10 gemessen wird, ausgewertet, um die genaue Position des Flüssigkeitspegels 2 innerhalb des von diesem Sensorelement 10 erfassten Füllhöhenbereichs zu erfassen. Das weitere Auswerten erfolgt durch Differenzbildung zu einem Referenzwert.

Der Referenzwert entspricht dem Wert der Kapazität, welcher an einem vollständig unterhalb des Flüssigkeitspegels 2 befindlichen Sensorelement 10 gemessen wird.

Hierzu werden die vollständig unterhalb des Flüssigkeitspegels befindlichen Sensorelemente 10 ausgewertet, und der Referenzwert durch Mittelung bestimmt. Bei der Mittelung werden einzelne Werte der Kapazität, welche deutlich von der Mehrheit der Werte abweichen, nicht berücksichtigt. Ein solcher abweichender Wert kann insbesondere durch Schichtenbildung innerhalb der Flüssigkeit, wie in Fig. 1 dargestellt, oder durch Ablagerungen am Boden 5b des Behälters 5 zustande kommen. Der Referenzwert wird abgespeichert, so dass für den Fall, dass in einem nachfolgenden Mess-Zyklus der Referenzwert nicht durch eine Messung bestimmt werden kann, z.B. bei einem Füllstand im Bereich des untersten Sensorelements 10, ein zuvor gespeicherter Referenzwert zur Verfügung steht.

Eine möglichst genaue Bestimmung des Referenzwertes bietet den Vorteil, dass nicht nur die Genauigkeit der Füllstanderfassung erhöht wird, sondern auch weitere Informationen aus dem Referenzwert gewonnen werden können. Beispielsweise kann auf die Art oder Eigenschaften der Flüssigkeit rückgeschlossen werden. Dies kann insbesondere bei Kraftstoff-Behältern in Fahrzeugen von Vorteil sein, um z.B. einen Wasseranteil im Kraftstoff bestimmen zu können. Auch könnte z.B. ein fälschliches Betanken mit Diesel anstelle von Benzin erkannt werden und eine entsprechende Warnung erfolgen.

Das beschriebene Verfahren zur Füllstanderfassung ermittelt im Prinzip zunächst eine Füllhöhe des Behälters. Diese Füllhöhe wird bei der Auswertung bzw. durch eine weitere Verarbeitung der Füllhöhe unter Einbeziehung geometrischer Informationen bezüglich des Behälters 5 in Form einer Füllhöhen-Füllvolumen-Kennlinie in einen Füllstand des Behälters 5 umgesetzt.

Bei dem in Fig. 1 gezeigten Füllstand-Messsystem ist die Auswertungsvorrichtung 16 derart ausgestaltet, dass sie kontinuierliche Änderungen der Kapazität der Mess-Kondensatoren 10' erfassen kann. Hierdurch können die Mess-Kondensatoren 10' nicht nur als Niveauschalter betrieben werden, sondern es erfolgt eine kontinuierliche Erfassung der Position des Flüssigkeitspegels 2 innerhalb der von den Mess-Kondensatoren 10' erfassten Füllhöhenbereiche. Hierdurch wird bei einer vergleichbaren Anzahl von Mess-Kondensatoren 10' eine genauere Füllstanderfassung ermöglicht.

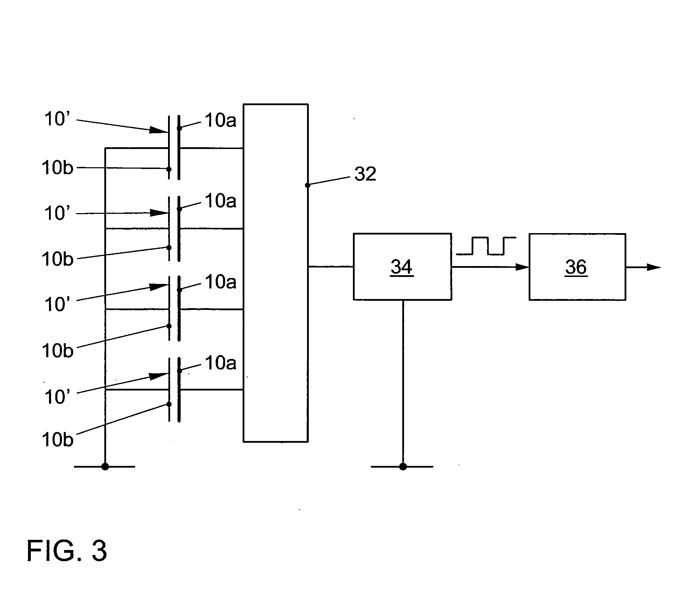

In Fig. 3 ist schematisch eine Schaltungsanordnung gezeigt, welche in dem Füllstand-Messsystem gemäß dem Ausführungsbeispiel der vorliegenden Erfindung eingesetzt ist. Die Schaltungsanordnung wertet Kapazitäten der Mess-Kondensatoren 10' aus, indem sie jeweils einen der Mess-Kondensatoren 10' mit Hilfe von Schaltmitteln 32 mit einer Signalerzeugungsschaltung 34 verschaltet, so dass bei einer von der Signalerzeugungsschaltung 34 erzeugten Impulsfolge der Abstand der Impulse durch die Kapazität des jeweiligen Mess-Kondensators 10' bestimmt ist. Die Schaltmittel 32 sind derart angesteuert, dass sie die Mess-Kondensatoren 10' in der bestimmten Reihenfolge mit der Signalerzeugungsschaltung 34 verbinden, so dass die Mess-Kondensatoren 10', welche sich mit hoher Wahrscheinlichkeit in der Nähe des Flüssigkeitspegels befinden, zuerst ausgewertet werden.

Die Schaltmittel 32 sind derart ausgestaltet, dass sie wahlweise eine Messelektrode 10a, welche zusammen mit einer Gegenelektrode 10b einen der Mess-Kondensatoren 10' bildet, mit der Signalerzeugungsschaltung 34 verschalten können, so dass bei einer von der Signalerzeugungsschaltung 34 erzeugten Impulsfolge der Abstand der Impulse durch die Kapazität des jeweiligen Mess-Kondensators 10' bestimmt ist. Hierfür umfasst die Signalerzeugungsschaltung 34 vorzugsweise eine Multivibratorschaltung. Alternativ kann auch ein Tastverhältnis der Impulsfolge durch die Kapazität bestimmt sein. Eine Verarbeitungsvorrichtung 36 verarbeitet die den einzelnen Mess-Kondensatoren 10' entsprechenden Impulsfolgen und erzeugt darauf basierend ein Ausgangssignal, welches dem Füllstand des Behälters entspricht. Die Verarbeitungsvorrichtung 36 umfasst dafür Informationen bezüglich der Geometrie des Behälters und der Positionen der einzelnen Sensorelemente 10 bzw. Mess-Kondensatoren 10'.

Auch wenn sich das obige Ausführungsbeispiel auf kapazitive Sensorelemente und die Füllstanderfassung in dem Kraftstoff-Behälter eines Fahrzeuges bezieht, ist die Erfindung nicht darauf beschränkt. Vielmehr kann die Erfindung auch vorteilhaft im Zusammenhang mit anderen Typen von Sensorelementen eingesetzt werden, z.B. mit resistiven Sensorelementen, bei welchen eine von dem Füllstand abhängige Änderung des elektrischen Widerstands erfasst wird.

### BEZUGSZEICHENLISTE

- 1: Füllrichtung
- 2: Flüssigkeitspegel
- 5: Behälter
- 5b: Boden
- 10: Sensorelement
- 10': Mess-Kondensator
- 10a: Messelektrode
- 10b: Gegenelektrode
- 16: Auswertungsvorrichtung
- 32: Schaltmittel
- 34: Signalerzeugungsschaltung
- 36: Verarbeitungsvorrichtung

## Patentansprüche

1. Verfahren zum Auslesen Füllstandsensors, wobei der Füllstandsensor eine Vielzahl von Sensorelementen (10, 10') umfasst, von denen jedes einen entsprechenden Füllhöhenbereich erfasst, **dadurch gekennzeichnet, dass** das Verfahren die Schritte umfasst:
a) ein erstes Auswerten der Sensorelemente (10, 10') zur Feststellung, in welchem Füllhöhenbereich sich ein Flüssigkeitspegel befindet,
b) ein weiteres Auswerten des demjenigen Füllhöhenbereich, in welchem sich der Flüssigkeitspegel (2) befindet, entsprechenden Sensorelements (10, 10') zur Bestimmung der Position des Flüssigkeitspegels (2) innerhalb des von diesem Sensorelement (10, 10') erfassten Füllhöhenbereichs.

2. Verfahren nach Anspruch 1, **dadurch gekennzeichnet, dass** im Schritt a) die Sensorelemente (10, 10') separat in einer bestimmten Reihenfolge ausgewertet werden.

3. Verfahren nach Anspruch 2, **dadurch gekennzeichnet, dass** Sensorelemente (10, 10'), welche mit hoher Wahrscheinlichkeit in der Nähe des Flüssigkeitspegels (2) liegen, zuerst ausgewertet werden.

4. Verfahren nach Anspruch 3, **dadurch gekennzeichnet, dass** bei der bestimmten Reihenfolge Sensorelemente (10, 10'), welche in der Nähe eines Initialpegels liegen, zuerst ausgewertet werden.

5. Verfahren nach einem der vorhergehenden Ansprüche, **dadurch gekennzeichnet, dass** im Schritt b) eine Differenz zu einem Referenzwert ausgewertet wird.

6. Verfahren nach Anspruch 5, **dadurch gekennzeichnet, dass** der Referenzwert einem vollständig unterhalb des Flüssigkeitspegels (2) befindlichen Sensorelement (10, 10') entspricht.

7. Verfahren nach einem der Ansprüche 5 oder 6, **dadurch gekennzeichnet, dass** der Referenzwert durch Auswerten mindestens eines der Sensorelemente (10, 10') bestimmt wird.

8. Verfahren nach einem der Ansprüche 5 bis 7, **dadurch gekennzeichnet, dass** zur Bestimmung des Referenzwerts alle vollständig unterhalb des Flüssigkeitspegels (2) befindlichen Sensorelemente (10, 10') ausgewertet werden.

9. Verfahren nach Anspruch 8, **dadurch gekennzeichnet, dass** der Referenzwert durch Mittelung der Werte von einzelnen vollständig unterhalb des Flüssigkeitspegels (2) befindlichen Sensorelementen (10, 10') bestimmt wird.

10. Verfahren nach einem der Ansprüche 8 oder 9, **dadurch gekennzeichnet, dass** bei der Bestimmung des Referenzwertes an einzelnen Sensorelementen (10, 10') bestimmte Werte, die von einer Mehrheit der an einzelnen Sensorelementen (10, 10') bestimmten Werte deutlich abweichen, nicht berücksichtigt werden.

11. Verfahren nach einem der Ansprüche 7 bis 10, **dadurch gekennzeichnet, dass** der durch Auswerten von Sensorelementen (10, 10') bestimmte Referenzwert für eine nachfolgende Füllstanderfassung gespeichert wird.

12. Verfahren nach Anspruch 11, **dadurch gekennzeichnet, dass** bei einem Flüssigkeitspegel (2) im Füllhöhenbereich eines untersten Sensorelements (10, 10') der zuvor gespeicherte Referenzwert verwendet wird.

13. Verfahren nach einem der vorhergehenden Ansprüche, **dadurch gekennzeichnet, dass** es sich bei dem Füllstandsensor um einen kapazitiven Füllstandsensor handelt, wobei für die Sensorelemente (10') jeweils eine entsprechende Kapazität ausgewertet wird.

14. Verfahren nach einem der vorhergehenden Ansprüche, **dadurch gekennzeichnet, dass** das weitere Auswerten in Schritt b) mit einer höheren Genauigkeit erfolgt als das erste Auswerten in Schritt a).

15. Füllstand-Messsystem, umfassend einen Füllstandsensor mit mehreren Sensorelementen (10, 10'), von denen jedes einen bestimmten Füllhöhenbereich erfasst, und eine Auswertungsvorrichtung (16), **dadurch gekennzeichnet, dass** die Auswertungsvorrichtung (16) zunächst die Sensorelemente (10, 10') auswertet, um festzustellen, in welchem Füllhöhenbereich sich ein Flüssigkeitspegel (2) befindet, und dass die Auswertungsvorrichtung (16) danach dasjenige Sensorelement (10, 10'), das den Füllhöhenbereich erfasst, in welchem sich der Flüssigkeitspegel befindet, weiter auswertet, um die Position des Flüssigkeitspegels (2) innerhalb des von diesem Sensorelement (10, 10') erfassten Füllhöhenbereichs zu bestimmen.

16. Füllstand-Messsystem nach Anspruch 15, **dadurch gekennzeichnet, dass** das Füllstand-Messsystem zur Durchführung des Verfahrens nach einem der Ansprüche 1 bis 14 ausgestaltet ist.

17. Füllstand-Messsystem nach Anspruch 15 oder 16, **dadurch gekennzeichnet, dass** das Füllstand-Messsystem Schaltmittel (32) umfasst, um in einer bestimmten Reihenfolge wahlweise eines der Sensorelemente (10, 10') mit der Auswertungsvorrichtung (16) zu verschalten.

18. Füllstand-Messsystem nach einem der Ansprüche 15 bis 17, **dadurch gekennzeichnet, dass** die Sensorelemente (10, 10') durch Mess-Kondensatoren (10') gebildet sind, welche durch jeweils eine Messelektrode (10a) sowie eine Gegenelektrode (10b) gebildet sind, wobei die Mess-Kondensatoren (10') derart in dem Behälter (5) angeordnet sind, dass die Kapazität der Mess-Kondensatoren (10') von dem Füllstand des Behälters (5) abhängt und die Kapazität eines Mess-Kondensators (10') in dem von diesem Mess-Kondensator (10') erfassten Füllhöhenbereich durch die Auswertungsvorrichtung (16) erfassbar variiert.

19. Füllstandmesssystem nach Anspruch 18, **dadurch gekennzeichnet, dass** die Auswertungsvorrichtung (16) mindestens eine Signalerzeugungsschaltung (34) umfasst, welches eine Impulsfolge erzeugt, wobei die Breite und/oder der Abstand der Impulse von der Kapazität jeweils eines der Mess-Kondensatoren (10') abhängt.

20. Füllstandmesssystem nach Anspruch 19, **dadurch gekennzeichnet, dass** die Auswertungsvorrichtung (16) die Kapazitäten der Mess-Kondensatoren (10') über eine durch den Abstand der Impulse bestimmte Frequenz auswertet.
